# EUROPÄISCHE PATENTANMELDUNG

(11) **EP 0 807 764 A1**
(43) Veröffentlichungstag der Anmeldung: **19.11.1997**
(21) Anmeldenummer: 97107429.9
(22) Anmeldetag: 06.05.1997
(51) Int. Cl.: F16D 3/84, F16J 3/04

(54) **Faltenbalg aus thermoplastischem oder elastomerem Material zur Abdeckung von Gelenken**

(30) Priorität: 14.05.1996 DE 19619368
(71) Anmelder: GKN Automotive AG, D-53797 Lohmar (DE)
(72) Erfinder: Konegen, Herbert, 51503 Rösrath (DE); Schreiber, Hans, 66333 Völklingen-Ludweiler (DE); Schafferus, Thomas, 47495 Rheinberg (DE)
(74) Vertreter: Neumann, Ernst Dieter, Dipl.-Ing.

(57) **Zusammenfassung**

Die Erfindung bezieht sich auf einen Faltenbalg aus thermoplastischem oder elastomerem Material zur Abdeckung eines mit Schmiermittel gefüllten Gelenkraumes eines Gelenks, insbesondere eines drehend umlaufenden, stark beugbaren Gelenks, der eine Faltenbalgwand mit einer Mehrzahl von Falten und zwei abschließenden Bunden umfaßt, wobei sich Oberflächen der Faltenbalgwand bei starker Beugung des Gelenks gegenseitig berühren. Der Erfindung liegt die Aufgabe zugrunde, die Reibung an sich gegenseitig berührenden Oberflächenteilen bei starker Beugung bei Faltenbälgen dauerhaft herabzusetzen, ohne daß an der Gestaltgebung der Faltenbälge Veränderungen notwendig werden. Erfindungsgemäß wird die Aufgabe dadurch gelöst, daß die Faltenbalgwand zumindest im Bereich der sich bei starker Beugung des Gelenks gegenseitig berührenden Oberflächen eine Imprägnierung aus Kohlenwasserstoffen mit einem Molekulargewicht ≥ 200 aufweist, die als Schmierstoffreservoir zur Reibungsminderung an den Oberflächen dient.

## Beschreibung

Die Erfindung bezieht sich auf einen Faltenbalg aus thermoplastischem oder elastomerem Material zur Abdeckung eines mit Schmiermittel gefüllten Gelenkraumes eines Gelenks, insbesondere eines drehend umlaufenden, stark beugbaren Gelenks, der eine Faltenbalgwand mit einer Mehrzahl von Falten und zwei abschließenden Bunden umfaßt, wobei sich Oberflächen der Faltenbalgwand bei starker Beugung des Gelenks gegenseitig berühren. Die Erfindung bezieht sich weiterhin auf ein Verfahren zur Behandlung eines derartigen Faltenbalges.

Faltenbälge haben die Aufgabe, Gelenkräume abzudecken und damit den Austritt von Schmierfett aus diesen und den Eintritt von Schmutz in diese zu verhindern. Ein häufiger Anwendungsfall sind drehend umlaufende Gelenke im Bereich von Fahrzeugantriebssträngen. Dabei umschließen die beiden abschließenden Bunde zum einen eine Welle und zum anderen ein Gelenkbauteil, wobei der gelenkseitige Bund gewöhnlich einen größeren Durchmesser besitzt als der wellenseitige Bund.

Bei großen Beugewinkeln des Gelenks werden die Balgenfalten der sich mitbeugenden Faltenbälge derart stark verformt, daß sich ihre äußeren Oberflächen gegenseitig berühren. Kommt es hierbei zu Relativbewegungen zwischen den Oberflächen, werden diese durch die dann auftretende Reibung beansprucht. So ist es nicht zu vermeiden, daß bei hinzutretender Verschmutzung, durch eine Scheuerwirkung an den äußeren Oberflächen der Balgenfalten mit der Zeit Material abgetragen wird und dadurch die Lebensdauer des Faltenbalges herabgesetzt wird. Diese Scheuerwirkung tritt insbesondere im Bereich der in Längserstreckung in der Mitte des Faltenbalges befindlichen Balgenfalten auf.

Aus der DE 43 01 062 C1 ist ein Faltenbalg bekannt, bei dem eine Oberflächenbeschichtung aus Poly-alpha-Olefinen aufgebracht wird, um die Reibung zwischen sich bei starker Beugung des Gelenks gegenseitig berührenden Oberflächen der Faltenbalgwand herabzusetzen. Bei Hinzutreten von Schmutzpartikeln ist eine derartige Oberflächenbeschichtung schnell abgetragen, so daß bei einem Lastkollektiv des Gelenks mit hohem Anteil mit starker Beugung eine Verbesserung nur für einen Teilbereich der Gesamtlebensdauer des Faltenbalgs sichergestellt werden kann. Es wird hierbei vorgeschlagen, das Beschichtungsmaterial mittels Aufstreichens oder Eintauchens oder , sofern es eine geeignete Viskosität aufweist, mittels Aufsprühens aufzutragen. Zur Herabsetzung der Viskosität wird die Verwendung von Lösungsmitteln wie Terpenen, Aceton oder Alkohol vorgeschlagen. Bei Faltenbälgen aus thermoplastischem Elastomer (TPE) wird die Oberflächenbeschichtung offenbar durch wechselseitigen Abrieb beim Berühren der Falten frühzeitig abgetragen mit der Folge, daß nach kurzer Einlaufphase ein Quietschen (squeak) wie bei unbeschichteten TPE-Faltenbälgen auftritt. Der angestrebte Oberflächenschutz ist somit nicht gesichert. Im übrigen ist dieses Quietschen alleine aus Komfortgründen nicht akzeptabel.

Aus der US 4 830 767 ist ein Schmierfett für Antriebsgelenke, die mit einem Faltenbalg abgedeckt sind, bekannt. Dieses Fett soll dazu beitragen, das Elastomer dieser Faltenbälge vom Brechen und Sprödewerden während langen Winterbetriebes zu schützen. Weiterhin ist beschrieben, daß dieses Fett ein gutes Schmiermittel zwischen Metallteilen einerseits und elastomeren Kunststoffen andererseits ist. Als Basis für dieses Fett werden Poly-alpha-Olefine vorgeschlagen. Die Erzielung der angesprochenen Effekte verlangen jedoch eine Beimischung einer Kombination von Karbonat- und Phosphat-Additiven.

Aus der US 5 223 161 ist ein Fett für den gleichen Anwendungsfall bekannt, das Poly-alpha-Olefine als Basisöl hat, wobei ein Additivpaket aus Sulfat und einem aliphatischen Monocarboxylat besteht.

Aus der US 4 967 609 ist ein Faltenbalg aus Gummimaterial bekannt, der einen geschlossenen Überzug oder einzelne Ringelemente, die dauerhaft auf die Oberfläche der Falten aufgebracht sind, aufweist, wobei die Beschichtung oder die einzelnen Ringelemente aus einem Gummimaterial als Trägersubstanz und einem Anti-Degradations-Mittel besteht, die in die Oberfläche des Faltenbalges eindiffundieren sollen.

Aus der US 4 573 693 ist ein Faltenbalg zum Abdecken von Gleichlaufdrehgelenken bekannt, der eine Beschichtung aus einem Polyamidharz hat, die von einer Primer-Schicht auf dem Grundkörper getragen wird und den Verschleiß reduzieren soll.

Aus der US 4 265 663 ist es bekannt, eine Wachsformulierung aus einem flüssigen Poly-alpha-Olefin und einem flüssigen Silikon auf Gummi- und Elastomer-Schläuche und Anschlüsse aufzubringen, um diese zu schützen und so haltbar zu machen. Das flüssige Silikon wird in Form einer wässrigen Emulsion verwendet.

Aus PATENT ABSTRACTS OF JAPAN 61-256024(A) ist ein Faltenbalg bekannt, bei dem eine Beschichtung zur Reduzierung des Abriebs, zur Verbesserung der Ozonwiderstandsfähigkeit und zur Verbesserung des Schwindungsverhaltens vorgesehen ist, die ein weiches Segment aus einer Polyethersektion und ein hartes Segment aus einer Polyestersektion umfaßt und die nach einer Primerbehandlung aufgeklebt wird.

Aus PATENT ABSTRACTS OF JAPAN 59-84678 ist weiter ein Faltenbalg bekannt, bei dem eine Beschichtung aus einem Urethan-Film, der Aluminiumpulver enthält, vorgesehen ist, um den Abriebswiderstand zu erhöhen und den Reibungswiderstand herabzusetzen.

Aus der DE 39 36 640 A1 ist es bekannt, einen Faltenbalg mit einem Bundbereich zum erleichterten Aufziehen dadurch zu schaffen, daß der Bundbereich aus einem Werkstoff mit einem hohen Wachsanteil besteht oder unter Druck an seiner Oberfläche eine gleitfähige Substanz abgibt.

Der Erfindung liegt die Aufgabe zugrunde, den Verschleiß der sich gegenseitig berührenden Oberflächen bei Faltenbälgen dauerhaft herabzusetzen, ohne die Konstruktion der Faltenbälge wesentlich zu verändern.

Erfindungsgemäß wird die Aufgabe dadurch gelöst, daß die Faltenbalgwand zumindest im Bereich der sich bei starker Beugung des Gelenks gegenseitig berührenden Oberflächen eine Imprägnierung aus Kohlenwasserstoffen mit einem Molekulargewicht ≥ 200 aufweist, die als Schmierstoffreservoir zur Reibungsminderung an den Oberflächen dient. Die Imprägnierung liefert ein dauerhaftes Reservoir von Schmiermittel für die äußere Oberfläche über die ganze Lebensdauer des Faltenbalgs. Anders als Beschichtungen, die örtlich verletzt werden können, sorgt die erfindungsgemäße Imprägnierung an der Oberfläche für gleichbleibend günstige Reibungsverhältnisse. Ungeachtet einer unverändert stattfindenden Berührung der Falten bei starker Beugung wird der Verschleiß gering gehalten. Überraschenderweise kann ein Quietschen (squeak) der Faltenbälge, das bei mit Poly-alpha-Olefinen oberflächenbeschichteten TPE-Faltenbälgen nach einer Einlaufphase auftritt, hiernach völlig unterdrückt werden. Eine Änderung der Formgebung der Falten ist in kostengünstiger Weise nicht erforderlich. Die Imprägnierung ist sowohl bei Faltenbälgen aus thermoplastischem als auch aus elastomerem Material anwendbar.

Bevorzugte Kohlenwasserstoffe für eine solche Imprägnierung sind Poly-alpha-Olefine, und zwar Öle sowohl als auch Wachse, sowie paraffinische Mineralöle.

Insbesondere ist vorgesehen, daß die Imprägnierung sich im wesentlichen zusammensetzt aus 60 Gew.% eines Poly-alpha-Olefins mit einer Viskosität von 40 mm²/sec und 40 Gew.% eines Poly-alpha-Olefins mit einer Viskosität von 8 mm²/sec, jeweils gemessen bei 100°C, oder daß die Imprägnierung im wesentlichen aus einem Poly-alpha-Olefin mit einer Viskosität von 40 mm²/sec oder von 100 mm²/sec oder von 150 mm²/sec, jeweils gemessen bei 100°C, besteht.

Um das Herstellen der Imprägnierung zu erleichtern, wird durch Zusetzen eines Lösungsmittels als Trägersubstanz zu dem einzubringenden Material dessen Viskosität während des Imprägnierens herabgesetzt. Dies kann durch Erwärmen der einzubringenden Substanz zum Herstellen der Imprägnierung noch unterstützt werden.

Solche Trägersubstanzen können Paraffine, Isoparaffine, Terpene, Aceton, Waschbenzin oder Alkohol sein. Als geeignet hat sich Isoparaffin 175 erwiesen.

Eine bevorzugte Imprägnierung umfaßt eine Mischung von Poly-alpha-Olefinen und Paraffinen oder Isoparaffinen mit 5 - 10 % Poly-alpha-Olefinen und 95 - 90 % Paraffinen oder Isoparaffinen.

Weiterhin ist es bevorzugt, der Imprägnierung einen Esterölanteil zuzusetzen, um einen Weichmacherentzug aus der Faltenbalgwand zu vermeiden.

Eine geeignete Viskosität für eine Substanz zum Herstellen der Imprägnierung liegt in der Größenordnung zwischen 1,5 und 20 mm²/sec, gemessen bei 100°C. Diese Viskosität erlaubt es, die Imprägnierung in einen äußeren Oberflächenbereich eindringen zu lassen, wobei ggfs. die Trägersubstanz bzw. das Lösungsmittel anschließend verdampft, wonach die Kohlenwasserstoffe im Material der Faltenbalgwand verbleiben, um das genannte Schmierstoffreservoir zu bilden. Die Dicke dieses mit einer Imprägnierung versehenen Oberflächenbereiches kann von der Oberfläche ausgehend etwa 0,2 mm betragen.

In bevorzugter Weise werden die Bunde des Faltenbalgs von einem Versehen mit einer Imprägnierung ausgenommen, da für die Befestigung der darauf liegenden Spannbänder ein Schmiereffekt ungeeignet wäre.

An den erfindungsgemäßen, mit einer Imprägnierung versehenen Faltenbälgen treten kein Abrieb, keine Rißbildung und keine bleibenden Verformungen auf, die durch daraus folgende Undichtigkeit die Funktion des Gelenks beeinträchtigen. Bei TPE-Faltenbälgen wird unzulässiges Quietschen vermieden.

Nachstehend wird die Erfindung anhand eines in der Zeichnung dargestellten Ausführungsbeispiels näher erläutert.
- Fig. 1: zeigt einen nicht montierten entspannten Faltenbalg in Ansicht;
- Fig. 2: zeigt einen gebeugten Faltenbalg in Teildarstellung (ohne Bundbereiche) in Ansicht.

In den Figuren sind entsprechende Einzelheiten mit gleichen Ziffern belegt. Die Figuren zeigen einen Faltenbalg wie er üblicherweise zum Abdecken des Gelenkraumes eines Gleichlaufdrehgelenks verwendet wird.

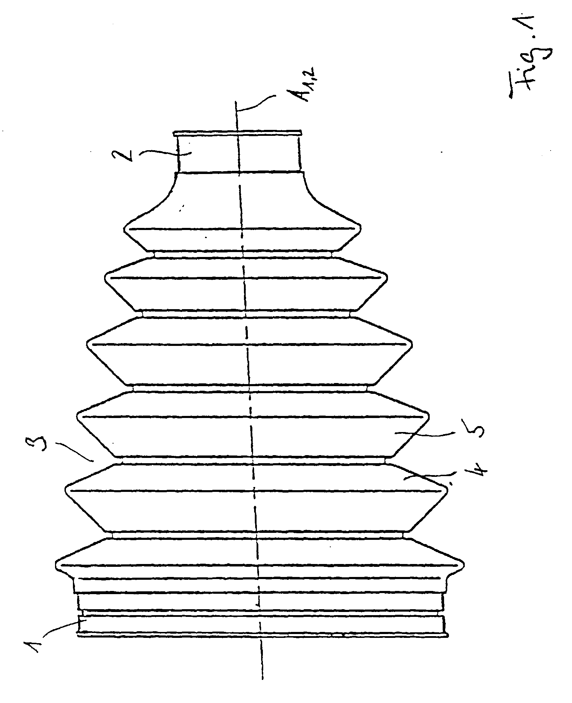

In Figur 1 ist ein Faltenbalg mit einem ersten größeren Bundbereich 1, einem zweiten Bundbereich 2 und dazwischenliegend fünf eingezogenen Ringfalten 3 dargestellt, wobei diese Ringfalten jeweils von gegenüberliegenden Oberflächenteilen 4, 5 begrenzt werden. Der Bund 1 ist zum Festlegen auf einem Gelenkaußenteil, der Bund 2 zum Festlegen auf einer in ein Gelenkinnenteil eingesteckten Welle vorgesehen. Die Form der Bunde läßt ein Einlegen eines Spannbandes zu. Die Achse A_{1, 2} stellt die übereinstimmende Mittelachse der Bundbereiche dar.

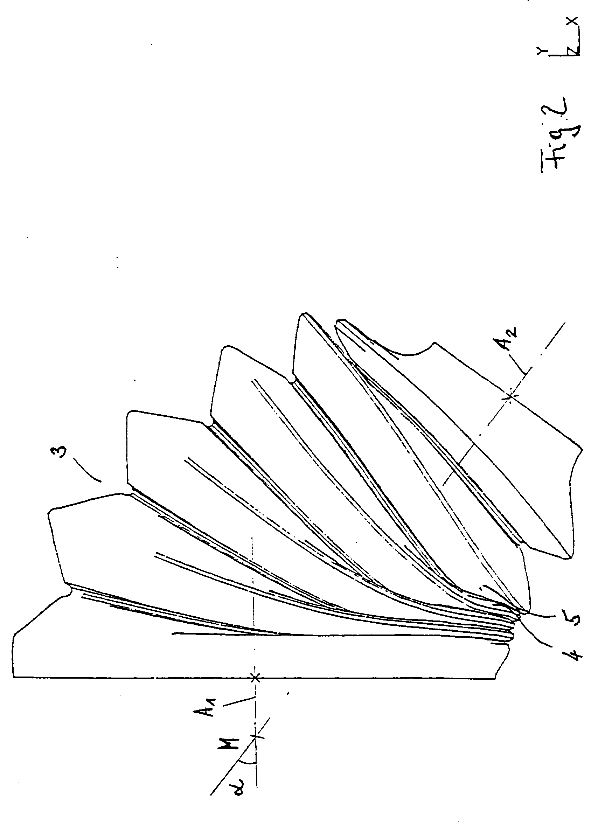

In Figur 2 ist unter Weglassung der Bundbereiche 1, 2 der Faltenbalg in verkürzter und gebeugter Stellung dargestellt. Die Mittelachse A₁ des ersten, nicht dargestellten Bundbereiches 1 und die Mittelachse A₂ des zweiten, nicht dargestellten Bundbereiches 2 sind zueinander gebeugt, schneiden sich im Mittelpunkt M des nicht dargestellten Gelenks unter einem Winkel α von ca. 40°. Auf der Außenseite sind die Ringfalten 3 im wesentlichen noch erkennbar, während sie auf der Innenseite zusammengedrückt sind, so daß gegenüberliegende Flächen 4, 5 berührend aneinanderliegen. Bei umlaufender Drehbewegung entstehen hierbei aufgrund der in Achsrichtung unsymmetrischen Form auch Relativbewegungen und Reibung. Es wird vorausgesetzt, daß der hier gezeigte Faltenbalg eine erfindungsgemäße Imprägnierung aufweist, die die Reibung reduziert.

## Patentansprüche

1. Faltenbalg aus thermoplastischem oder elastomerem Material zur Abdeckung eines mit Schmiermittel gefüllten Gelenkraumes eines Gelenks, insbesondere eines drehend umlaufenden, stark beugbaren Gelenks, der eine Faltenbalgwand mit einer Mehrzahl von Falten und zwei abschließenden Bunden umfaßt, wobei sich Oberflächen der Faltenbalgwand bei starker Beugung des Gelenks gegenseitig berühren,
dadurch gekennzeichnet,
daß die Faltenbalgwand zumindest im Bereich der sich bei starker Beugung des Gelenks gegenseitig berührenden Oberflächen eine Imprägnierung aus Kohlenwasserstoffen mit einem Molekulargewicht ≥ 200 aufweist, die als Schmierstoffreservoir zur Reibungsminderung an den Oberflächen dient.

2. Faltenbalg nach Anspruch 1,
dadurch gekennzeichnet,
daß die Imprägnierung aus Poly-alpha-Olefinen besteht.

3. Faltenbalg nach Anspruch 2,
dadurch gekennzeichnet,
daß die Imprägnierung sich im wesentlichen zusammensetzt aus 60 Gew.% eines Poly-alpha-Olefins mit einer Viskosität von 40 mm²/sec und 40 Gew.% eines Poly-alpha-Olefins mit einer Viskosität von 8 mm²/sec, jeweils gemessen bei 100°C.

4. Faltenbalg nach Anspruch 2,
dadurch gekennzeichnet,
daß die Imprägnierung im wesentlichen aus einem Poly-alpha-Olefin mit einer Viskosität von 40 mm²/sec gemessen bei 100°C besteht.

5. Faltenbalg nach Anspruch 2,
dadurch gekennzeichnet,
daß die Imprägnierung im wesentlichen aus einem Poly-alpha-Olefin mit einer Viskosität von 100 mm²/sec gemessen bei 100°C besteht.

6. Faltenbalg nach Anspruch 2,
dadurch gekennzeichnet,
daß die Imprägnierung im wesentlichen aus einem Poly-alpha-Olefin mit einer Viskosität von 150 mm²/sec gemessen bei 100°C besteht.

7. Faltenbalg nach einem der Ansprüche 1 bis 6,
dadurch gekennzeichnet,
daß die Imprägnierung paraffinische Mineralöle umfaßt.

8. Faltenbalg nach einem der Ansprüche 1 bis 7,
dadurch gekennzeichnet,
daß die Imprägnierung einen Anteil Esteröl umfaßt.

9. Faltenbalg nach Anspruch 1,
dadurch gekennzeichnet,
daß die Imprägnierung in einer Mischung von 5 - 10 Gew.% Poly-alpha-Olefinen und 95 - 90 Gew.% Isoparaffinen als Trägerfluid eingebracht ist.

10. Faltenbalg nach einem der Ansprüche 1 bis 9,
dadurch gekennzeichnet,
daß die Imprägnierung von der Oberfläche ausgehend eine Tiefe von etwa 0,2 mm aufweist.

11. Verfahren zur Behandlung eines Faltenbalgs aus thermoplastischem oder elastomerem Material zur Abdeckung eines mit Schmiermittel gefüllten Gelenkraumes eines Gelenks, insbesondere eines drehend umlaufenden, stark beugbaren Gelenks, der eine Faltenbalgwand mit einer Mehrzahl von Falten und zwei abschließenden Bunden umfaßt, wobei sich Oberflächen der Faltenbalgwand bei starker Beugung des Gelenks gegenseitig berühren,
dadurch gekennzeichnet,
daß die Faltenbalgwand zumindest im Bereich der sich bei starker Beugung des Gelenks gegenseitig berührenden Oberflächen mit einer Imprägnierung aus Kohlenwasserstoffen mit einem Molekulargewicht ≥ 200 versehen wird, die als Schmierstoffreservoir zur Reibungsminderung an den Oberflächen dient, indem eine Substanz zum Imprägnieren mit einer niedrigen Viskosität durch Lösen der Kohlenwasserstoffe in einem Lösungsmittel als Trägersubstanz hergestellt und eingebracht wird.

12. Verfahren nach Anspruch 11,
dadurch gekennzeichnet,
daß die Substanz zum Imprägnieren mit in einer Trägersubstanz gelösten Poly-alpha-Olefinen hergestellt wird.

13. Verfahren nach Anspruch 12,
dadurch gekennzeichnet,
daß die Substanz zum Imprägnieren aus 6 Gew.% eines Poly-alpha-Olefins mit einer Viskosität von 40 mm²/sec, 4 Gew.% eines Poly-alpha-Olefins mit einer Viskosität von 8 mm²/sec, jeweils gemessen bei 100°C, und 90 Gew.% Isoparaffin hergestellt wird.

14. Faltenbalg nach Anspruch 12,
dadurch gekennzeichnet,
daß die Substanz zum Imprägnieren aus 10 Gew.% eines Poly-alpha-Olefins mit einer Viskosität von 40 mm²/sec gemessen bei 100°C und 90 Gew.% Isoparaffin hergestellt wird.

15. Verfahren nach Anspruch 12,
dadurch gekennzeichnet,
daß die Substanz zum Imprägnieren mit Poly-alpha-Olefin mit einer Viskosität von 100 mm²/sec gemessen bei 100°C hergestellt wird.

16. Verfahren nach Anspruch 12,
dadurch gekennzeichnet,
daß die Substanz zum Imprägnieren mit Poly-alpha-Olefin mit einer Viskosität von 150 mm²/sec gemessen bei 100°C hergestellt wird.

17. Verfahren nach einem der Ansprüche 12 bis 16,
dadurch gekennzeichnet,
daß die Substanz zum Imprägnieren mit paraffinischen Mineralölen hergestellt wird.

18. Verfahren nach einem der Ansprüche 12 bis 17,
dadurch gekennzeichnet,
daß die Substanz zum Imprägnieren mit einem Anteil von Esteröl hergestellt wird.

19. Verfahren nach einem der Ansprüche 12 bis 18,
dadurch gekennzeichnet,
daß die Substanz zum Imprägnieren durch Erwärmen auf eine erniedrigte Viskosität gebracht wird.

20. Verfahren nach einem der Ansprüche 11 bis 19,
dadurch gekennzeichnet,
daß Paraffine oder Isoparaffine, insbesondere Isoparaffin 175 als Trägersubstanz verwendet werden.

21. Verfahren nach einem der Ansprüche 11 oder 20,
dadurch gekennzeichnet,
daß die Substanz zum Imprägnieren aus einer Mischung von 5 - 10 % Poly-alpha-Olefinen und 95 - 90 % Isoparaffinen als Trägerfluid besteht.

22. Verfahren nach einem der Ansprüche 11 bis 20,
dadurch gekennzeichnet,
daß Terpene als Trägersubstanz verwendet werden.

23. Verfahren nach einem der Ansprüche 11 bis 20,
dadurch gekennzeichnet,
daß Aceton oder Waschbenzin als Trägersubstanz verwendet wird.

24. Verfahren nach einem der Ansprüche 11 bis 20,
dadurch gekennzeichnet,
daß Alkohol als Trägersubstanz verwendet wird.

25. Verfahren nach einem der Ansprüche 11 bis 24,
dadurch gekennzeichnet,
daß die Viskosität der Substanz zum Imprägnieren auf einen Bereich zwischen 1,5 und 20,0 mm²/sec, gemessen bei 100°C, eingestellt wird.

26. Verfahren nach einem der Ansprüche 11 bis 25,
dadurch gekennzeichnet,
daß die Bunde vom Einbringen einer Imprägnierung ausgenommen werden.
